# EUROPÄISCHE PATENTSCHRIFT

(11) **EP 3 077 706 B1**
(45) Veröffentlichungstag und Bekanntmachung des Hinweises auf die Patenterteilung: **01.07.2020**
(21) Anmeldenummer: 14808864.4
(22) Anmeldetag: 17.11.2014
(51) Int. Cl.: F16H 25/20, F15B 15/06, H02K 7/06

(54) **LINEARAKTUATOR**
LINEAR ACTUATOR
ACTIONNEUR LINÉAIRE

(30) Priorität: 06.12.2013 DE 102013225200
(43) Veröffentlichungstag der Anmeldung: 12.10.2016
(73) Patentinhaber: Continental Teves AG & Co. OHG, 60488 Frankfurt am Main (DE)
(72) Erfinder: STAUDER, Peter, 55128 Mainz (DE); SCHAAF, Matthias, 56075 Koblenz (DE); KAUFMANN, Tom, 55566 Ippenschied (DE)
(86) Internationale Anmeldenummer: PCT/EP2014/074756
(87) Internationale Veröffentlichungsnummer: WO 2015/082199

(56) Entgegenhaltungen:
- WO-A1-2008/023198
- DE-A1-102009 019 209
- US-A- 4 521 707

## Beschreibung

Die Erfindung betrifft einen Linearaktor zur Erzeugung einer linearen Stellkraft.

Es sind hydraulische Linearaktuatoren bekannt, die in hydraulischen Fahrzeug-Bremsanlagen, insbesondere auch in Brake-by-Wire Bremssystemen eingesetzt werden. Ein solcher hydraulischer Linearaktuator ist bspw. aus der DE 10 2009 019 209 A1 bekannt. Dieser Linearaktuator besteht aus einem als Kugelgewindetrieb ausgebildeten Rotations-Translations-getriebe, welches eine Gewindespindel und eine zugehörige Gewindemutter aufweist, sowie aus einen bürstenlosen Elektromotor mit einem Rotor und einem Stator, die in einem Gehäuse angeordnet sind. Die Gewindespindel stellt die Antriebswelle des Elektromotors dar und wird daher direkt von diesem angetrieben, während die Gewindemutter nicht drehbar einer hydraulischen Kolben-Zylinder-Anordnung angeordnet ist, die den Hauptzylinder einer Fahrzeug-Bremsanlage bildet.

Ein solcher hydraulischer Linearaktuator kann jedoch bei Auftreten eines Einfachfehlers, wie bspw. einer Blockade des Kugelgewindetriebes ausfallen. Ein Betrieb der Bremsanlage ist damit nicht mehr möglich, so dass der Fahrer in der Rückfallebene bremsen muss. Bei Fahrzeugen mit autonomen Fahrerfunktionen, wie bspw. Brake-by-Wire-Systemen steht jedoch der Fahrer nicht oder nur eingeschränkt für eine Rückfallebene zur Verfügung.

Die DE 11 2005 003 675 T5 schlägt zur Lösung eines solchen Problems einen fehlertoleranten Linearaktuator vor, welcher hinsichtlich funktionswichtigen Komponenten redundant aufgebaut ist. So umfasst dieser bekannte Linearaktuator eine erste motorische Antriebsvorrichtung mit einem ersten Motor und einer zugeordneten ersten, drehbaren und mit Kugellagerkugeln versehenen Kugelmutter, eine zweite motorische Antriebsvorrichtung mit einem zweiten Motor und einer zugeordneten zweiten, drehbaren und mit Kugellagerkugeln versehenen Kugelmutter sowie eine einzige Kugelspindel, welche sowohl mit der ersten als auch mit der zweiten Kugelmutter in Eingriff steht. Die Kugelspindel verschiebt sich, wenn einer der Motoren die Kugelmutter antreibt bzw. wenn beide Motoren die Kugelmuttern antreiben. Die beiden Antriebsvorrichtungen sind jeweils endseitig an der einzigen Kugelspindel angeordnet, so dass die Antriebswellen der beiden Motoren parallel versetzt zur Kugelspindel ausgerichtet sind. Die Kugelmuttern werden jeweils über ein Getriebe von dem zugehörigen Motor angetrieben.

Als nachteilig kann bei diesem bekannten fehlertoleranten Linearaktuator dessen Bauform angesehen werden, die aufgrund der achsparallelen Anordnung der beiden Antriebseinheiten und der Kugelspindel erheblichen Bauraum erfordert und daher für die Anwendung im Fahrzeugbau weniger geeignet ist.

Die DE 20 2010 016 542 U1 zeigt eine Lösung für einen kleinbauenden Spindelantrieb für eine Werkzeugmaschine auf, der einen ersten Antrieb mit einem ersten Motor und einen zweiten Antrieb mit einem zweiten Motor umfasst, wobei eine Spindelwelle wahlweise mittels des ersten Antriebes und/oder des zweiten Antriebes antreibbar ist und die Motorachsen der Antriebe koaxial zur Spindelwelle verlaufenden. Die kleinbauende Weise ergibt sich dadurch, dass der zweite Antrieb den ersten Antrieb zumindest abschnittsweise umgibt. Dies wird dadurch realisiert, dass der erste Antrieb als Direktantrieb mit einem drehfest mit der Spindelwelle gekoppelten Rotor oder als Innenläufer ausgebildet ist. Der zweite Antrieb ist ebenso als Direktantrieb in Form eines Ausläufermotors mit einem über eine Kupplung mit der Spindelwelle koppelbaren Läufer ausgebildet.

US 4, 521, 707 schlägt einen Aktuator mit drei Elektromotoren für ein Flugzeug vor, wobei die Elektromotoren jeweils eine Stufe in axialer Richtung um eine vorbestimmte Länge mechanisch verfahren können. Bei Ausfall eines Motors können die übrigen Motoren mit ihren zugehörigen Stufen die Länge der Stufe des zugeordneten ausgefallenen Motors kompensieren.

Die Aufgabe der vorliegenden Erfindung besteht darin, einen gegenüber dem Stand der Technik verbesserten Linearaktuator zur Erzeugung einer linearen Stellkraft anzugeben, welcher bei Auftreten zumindest eines Einfachfehlers voll funktionsfähig bleibt und zur Realisierung eines hydraulischen oder pneumatischen Stellelementes, bspw. im Rahmen eines Bremssystems für ein Fahrzeug geeignet ist, also insbesondere nur wenig Bauraum erfordert.

Diese Aufgabe wird gelöst durch einen Linearaktuator mit den Merkmalen des Patentanspruchs 1.

Ein solcher Linearaktuator zur Erzeugung einer linearen Stellkraft umfasst:
- eine erste motorische Antriebseinheit mit einer als Hohlwelle ausgebildeten ersten Antriebswelle,
- eine von der ersten motorischen Antriebseinheit angetriebenes erstes Rotations-Translationsgetriebe mit einer ersten Gewindespindel und einer ersten mit der Gewindespindel in Eingriff stehenden Gewindemutter, wobei die Antriebswelle der ersten motorischen Antriebseinheit als erste Gewindespindel ausgebildet ist,
- eine axial zur ersten motorischen Antriebseinheit angeordnete zweite motorische Antriebseinheit mit einer Antriebswelle, und
- ein von der zweiten motorischen Antriebseinheit angetriebenes zweites Rotations-Translationsgetriebe mit einer zweiten Gewindespindel und einer mit der zweiten Gewindespindel in Eingriff stehenden Gewindemutter, wobei die Antriebswelle der zweiten motorischen Antriebseinheit über die Hohlwelle mit der zweiten Gewindespindel drehfest verbunden ist.

Bei diesem erfindungsgemäßen Linearaktuator sind damit alle funktionswichtigen Komponenten, wie die motorischen Antriebseinheiten und die Rotations-Translationsgetriebe redundant vorhanden. Hierzu gehören bei den motorischen Antriebseinheiten im Falle der Realisierung als Elektromotoren sowohl die Läufer als auch die Motorwicklungen. Somit wird bei Ausfall eines dieser Komponenten die vollständige Funktion des Linearaktuators sichergestellt.

Die kleinbauende Bauform ergibt sich dadurch, dass die funktionswichtigen Hauptkomponenten, also die beiden motorischen Antriebseinheiten und die beiden Rotations-Translationsge-triebe axial hintereinander angeordnet sind. Der Materialbedarf für diesen erfindungsgemäßen Linearaktuator ist im Vergleich zu einem Linearaktuator mit nur einer Antriebseinheit und nur einem Rotations-Translationsgetriebe nur unwesentlich größer.

Nach einer vorteilhaften Ausgestaltung der Erfindung ist zur Erzeugung der linearen Stellkraft die erste Gewindemutter mit einem ersten Kraftübertragungselement und die zweite Gewindemutter mit einem zweiten Kraftübertragungselement verbunden. Durch die doppelte Ausführung der Kraftübertragungselemente zur Erzeugung der linearen Stellkraft bleibt die hohe Funktionssicherheit, insbesondere bei Auftreten von Einfachfehlern erhalten.

Nach einer weiteren bevorzugten Weiterbildung der Erfindung ist ein Hydraulik- oder Pneumatikblock vorgesehen, der mit den ersten und zweiten Kraftübertragungselementen zusammenwirkt. Aufgrund der axialen Anordnung der funktionswichtigen Komponenten des erfindungsgemäßen Linearaktuators kann in konstruktiv einfacher Weise ein solcher Linearaktuator in den Hydraulik- oder Pneumatikblock integriert werden. Vorzugsweise ist es hierzu vorgesehen, dass die ersten und zweiten Kraftübertragungselemente als Hydraulik- oder Pneumatikkolben ausgebildet sind, welche mit in dem Hydraulik- oder Pneumatikblock angeordneten und an die Hydraulik- oder Pneumatikkolben angepasste zylinderförmige Kammern zusammenwirken.

Die Integration des erfindungsgemäßen Linearaktuators in einen Hydraulik- oder Pneumatikblock erfolgt weiterbildungsgemäß dadurch, dass das erste und zweite Rotations-Translati-onsgetriebe auf gegenüberliegenden Seiten des Hydraulik- oder Pneumatikblockes angeordnet sind. Die in diesem Hydraulik- oder Pneumatikblock angeordneten zylinderförmigen Kammern bilden dann zusammen mit den als Kolben ausgebildete Kraftübertragungselementen jeweils eine hydraulische oder pneumatische Kolben-Zylindereinheit.

Weiterhin ist nach einer vorteilhaften Ausgestaltung die erste und zweite Antriebseinheit zusammen mit dem ersten Rotations-Translationsgetriebe in einem ersten Gehäuse angeordnet, welches an dem Hydraulik- oder Pneumatikblock angeflanscht ist. Vorzugsweise ist auch das zweite Rotations-Translationsgetriebe in einem zweiten Gehäuse angeordnet, welches an dem Hydraulik- oder Pneumatikblock angeflanscht ist. Damit liegen diese beiden Gehäuse auf gegenüberliegenden Seiten des Hydraulik- oder Pneumatikblockes an.

Die beiden Antriebseinheiten sind weiterbildungsgemäß jeweils als Elektromotor, bspw. als bürstenloser Elektromotor mit einem Stator und einem Läufer ausgebildet. Dabei ist es hinsichtlich einer kleinen Bauform besonders vorteilhaft, wenn weiterbildungsgemäß die erste Gewindemutter zumindest teilweise von dem Läufer der ersten Antriebseinheit umschlossen wird. Hierdurch wird nämlich die axiale Länge des Linearaktuators reduziert.

Ferner ist es vorteilhaft, wenn weiterbildungsgemäß das erste und zweite Rotations-Translationsgetriebe jeweils als Kugelgewindetrieb ausgebildet ist.

Schließlich wird bei einer letzten vorteilhaften Ausgestaltung der Erfindung die Funktionssicherheit auch dadurch gewährleistet, dass der ersten und zweiten Antriebseinheit jeweils eine Steuereinheit zugeordnet ist, wobei die Steuereinheiten identisch ausgebildet sind.

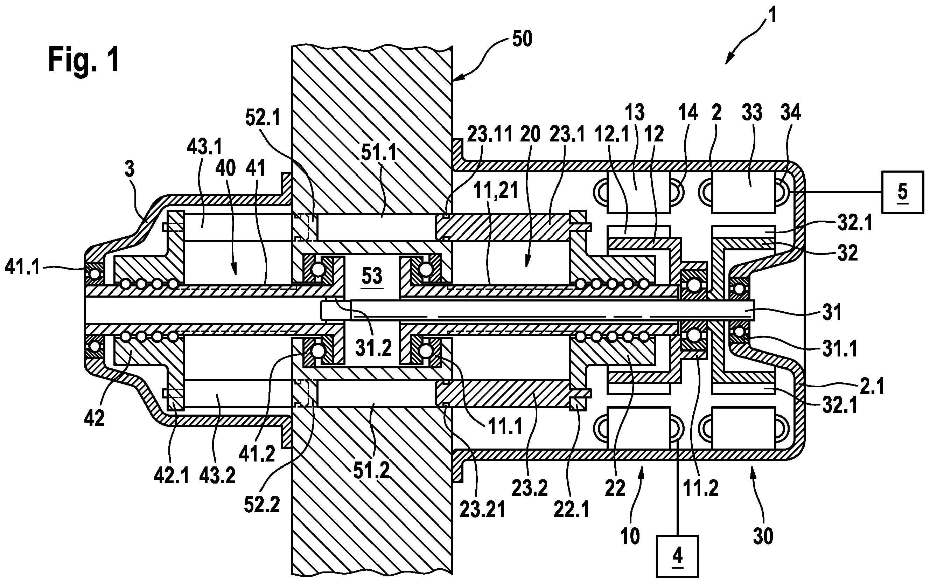

Die Erfindung wird nachfolgend anhand eines Ausführungsbeispiels unter Bezugnahme auf die einzige beigefügte Figur 1 ausführlich beschrieben. Diese Figur 1 zeigt eine schematische Schnittdarstellung eines Linearaktuators gemäß der Erfindung.

In Figur 1 ist ein schematisch angedeuteter Hydraulikblock 50 einer Hydraulik-Bremsanlage eines Fahrzeugs dargestellt, der zylinderförmige Kammern 51.1, 51.2, 52.1 und 52.2 aufweist und die zusammen mit als Kolben ausgebildeten Kraftübertragungselementen 23.1, 23.2, 43.1 und 43.2 des Linearaktuators 1 eine hydraulische Kolben-Zylinder-Anordnung bilden. Somit ist in Figur 1 ein hydraulischer Linearaktuator 1 dargestellt.

Dieser Linearaktuator 1 umfasst in einem ersten topfförmigen Gehäuse 2 zwei jeweils als bürstenloser Elektromotor ausgebildete motorische Antriebseinheiten 10 und 30, nämlich einen ersten Elektromotor 10 und einen zweiten Elektromotor 30. Diese beiden Elektromotoren 10 und 30 sind axial direkt benachbart angeordnet, wobei der zweite Elektromotor 30 topfbodenseitig hinsichtlich des ersten Gehäuses 2 angeordnet ist und sich daran in Richtung des Hydraulikblocks 50 der erste Elektromotor 10 anschließt.

Jeder dieser beiden Elektromotoren 10 und 30 ist aus einem Stator 13 bzw. 33 mit zugehöriger Motorwicklung 14 bzw. 34 und einem Läufer (Rotor) 12 bzw. 32 aufgebaut. Die beiden Läufer 12 und 32 bestehen aus einer topfförmigen Hülse und tragen auf ihrer äußeren Mantelfläche in regelmäßigen Winkelabständen Permanentmagnete 12.1 und 32.1. Zur Ermittlung der für ein phasenrichtiges Bestromen der beiden Statoren 13 und 33 benötigten Winkellagen der beiden Läufer 12 und 32 ist jeweils ein berührungslos arbeitender Lagesensor vorgesehen (in Figur 1 nicht dargestellt), dessen Signale einer Steuereinheit 4 des ersten Elektromotors 10 und einer Steuereinheit 5 des zweiten Elektromotors 30 zugeführt werden. Schließlich versorgt eine nicht dargestellte Betriebsspannungsquelle die Motorwicklungen 14 und 34 sowie die Steuereinheiten 4 und 5 mit der erforderlichen Betriebsspannung.

Der topfförmige Läufer 32 des zweiten Elektromotors 30 zeigt mit seiner Öffnung in Richtung des Bodenteils 2.1 des ersten Gehäuses 2, welches eine zentrische Ausbuchtung aufweist, welche zum einen von dem Läufer 32 teilweise umschlossen und andererseits ein Lager 31.1 zur Aufnahme der Antriebswelle 31 des zweiten Elektromotors 30 aufnimmt. Über einen Flansch des Läufers 32 ist dieser drehfest auf der Antriebswelle 31 angeordnet.

Diese Antriebswelle 31 ist durch eine als Hohlwelle ausgebildete Antriebswelle 11 des ersten Elektromotors 10 hindurchgeführt. Diese Antriebswelle 11 ist endseitig mit dem Läufer 12 des ersten Elektromotors 10 verbunden, wobei die Öffnung des topfförmigen Läufers 12 in Richtung des Hydraulikblockes 50 zeigt.

Dem ersten Elektromotor 10 ist ein als Kugelgewindetrieb ausgebildetes erstes Rotations-Translationsgetriebe 20 zugeordnet und wird von diesem angetrieben. Hierzu ist die Antriebswelle 11 gleichzeitig als erste Gewindespindel 21 dieses Rotations-Translationsgetriebes 20 ausgebildet und führt eine axial bewegliche erste Gewindemutter 22 dieses Rotations-Translationsgetriebes 20. Das Ende dieser ersten Gewindespindel 21 endet in einem zylindrischen Hohlraum 53 des Hydraulikblockes 50 und wird dort mittels eines Lagers 11.1 geführt. Eine weitere Lagerstelle 11.2 ist am gegenüberliegenden Ende der Hohlwelle 21 vorgesehen, die mit dem Läufer 12 verbunden ist.

Die erste Gewindemutter 22 ist hülsenförmig ausgebildet, so dass sie zumindest teilweise von dem topfförmigen Läufer 12 des ersten Elektromotors 10 umschlossen wird, wenn sie sich in diesem Bereich befindet. Ferner weist diese Gewindemutter 22 stirnseitig einen umlaufenden Flansch 22.1 auf, der randseitig in axialer Richtung verlaufende und auf dem Umfang gleichmäßig verteilte erste Kraftübertragungselemente 23.1 und 23.2 trägt.

Diese ersten Kraftübertragungselemente 23.1 und 23.2 sind als Hydraulikkolben ausgebildet und bilden zusammen mit den Kammern 51.1 und 51.2 eine Kolben-Zylinder-Anordnung des Hydraulikblockes 50. Diese Hydraulikkolben 23.1 und 23.2 sind in diesen Kammern 51.1 und 51.2 beweglich gelagert, so dass sich die erste Gewindemutter 22 auf der ersten Gewindespindel 21 nur axial bewegen kann. Bewegt sich bei einer entsprechenden Bestromung des ersten Elektromotors 10 die erste Gewindemutter 22 auf der ersten Gewindespindel 21 in Richtung auf den Hydraulikblock 50, so wird in den Kammern 51.1 und 51.2 des Hydraulikblockes 50 ein Hydraulikdruck aufgebaut. Dichtungen der Hydraulikkolben 23.1 und 23.2 sind mit 23.11 und 23.21 bezeichnet.

Dem zweiten Elektromotor 30 ist ein ebenso ein als Kugelgewindetrieb ausgebildetes zweites Rotations-Translations-getriebe 40 zugeordnet und wird von demselben angetrieben. Hierzu ist die durch die als erste Gewindespindel 21 ausgebildete Hohlwelle 11 hindurchgeführte Antriebswelle 31 mit einer zweiten Gewindespindel 41 des zweiten Rotations-Translationsgetriebes 40 verbunden, wobei auf dieser zweiten Gewindespindel 41 eine zweite Gewindemutter 42 axial verschiebbar angeordnet ist.

Dieses zweite Rotations-Translationsgetriebe 40 wird von einem zweiten topfförmigen Gehäuse 3 aufgenommen, welches gegenüberliegend zum ersten Gehäuse 2 an dem Hydraulikblock 50 angeflanscht ist.

Die zweite Gewindespindel 41 ist als Hohlwelle ausgebildet und wird zum einen mit einem Ende mit einem an dem zweiten Gehäuse 3 stirnseitig angeordneten Lager 41.1 und mit dem anderen Ende innerhalb des zylindrischen Hohlraumes 53 des Hydraulikblockes 50 mittels eines weiteren Lagers 41.2 drehbar gelagert. An diesem Ende ist diese zweite Gewindespindel 41 mittels eines Verbindungslagers 31.2 drehfest mit der Antriebswelle 31 des zweiten Elektromotors 30 verbunden.

Die zweite Gewindemutter 42 ist entsprechend der ersten Gewindemutter 22 hülsenförmig ausgebildet und weist ebenso einen radial abstehenden Flansch 42.1 auf, der an seinem Umfang in axialer Richtung verlaufende und gleichmäßig über den Umfang verteilte zweite Kraftübertragungselemente 43.1 und 43.2 trägt und die ebenso als Hydraulikkolben mit in dem Hydraulikblock 50 angeordneten Kammern 52.1 und 52.2 als Kolben-Zylinder-Anordnung zusammenwirken, so dass hierdurch für die zweite Gewindemutter 42 nur eine axiale Bewegung auf der zweiten Gewindespindel 41 möglich ist. Bewegt sich bei einer entsprechenden Bestromung des zweiten Elektromotors 30 die zweite Gewindemutter 42 auf der zweiten Gewindespindel 41 in Richtung auf den Hydraulikblock 50, so wird in den Kammern 52.1 und 52.2 des Hydraulikblockes 50 ein Hydraulikdruck aufgebaut.

Um ein unabhängiges voneinander Funktionieren zum einen der ersten mit den Kammern 51.1 und 51.2 zusammenwirkenden Hydraulikkolben 23.1 und 23.2 der ersten Gewindemutter 22 und zum anderen der zweiten mit den Kammern 52.1 und 52.2 zusammenwirkenden Hydraulikkolben 43.1 und 43.2 der zweiten Gewindemutter 42 sicherzustellen, sind die kreisförmig angeordneten Hydraulikkolben 23.1 und 23.2 der ersten Gewindemutter 22 gegenüber den Hydraulikkolben 43.1 und 43.2 der zweiten Gewindemutter 42 gegeneinander versetzt und damit auch die zugehörigen Kammern 51.1 und 51.2 bzw. 52.1 und 52.2 in dem Hydraulikblock 50.

Der Hydraulikblock 50 kann auch als Pneumatikblock ausgebildet werden.

### Bezugszeichen

- 1: Linearaktuator
- 2: erstes Gehäuse des Linearaktuators 1
- 2.1: Bodenteil des ersten Gehäuses 2
- 3: zweites Gehäuse des Linearaktuators 1
- 4: Steuereinheit der ersten Antriebseinheit 10
- 5: Steuereinheit der zweiten Antriebseinheit 30

- 10: erste motorische Antriebseinheit, Elektromotor
- 11: Antriebswelle der ersten Antriebseinheit 10
- 12: Läufer der ersten Antriebseinheit 10
- 12.1: Permanentmagnet
- 13: Stator der ersten Antriebseinheit 10
- 14: Motorwicklung der ersten Antriebseinheit 10

- 20: erstes Rotations-Translationsgetriebe
- 21: erste Gewindespindel des ersten Rotations-Translations-getriebe 20
- 22: erste Gewindemutter des ersten Rotations-Translationsgetriebe 20
- 22.1: Flansch der ersten Gewindemutter 22
- 23.1: erstes Kraftübertragungselement, Hydraulikkolben
- 23.11: Dichtung des Hydraulikkolbens 23.1
- 23.2: erstes Kraftübertragungselement, Hydraulikkolben
- 23.21: Dichtung des Hydraulikkolbens 23.2

- 30: zweite motorische Antriebseinheit, Elektromotor
- 31: Antriebswelle der zweiten Antriebseinheit 30
- 31.1: Lager der Antriebswelle 31
- 31.2: Verbindungslager der Antriebswelle 31
- 32: Läufer der zweiten Antriebseinheit 30
- 32.1: Permanentmagnet
- 33: Stator der zweiten Antriebseinheit 30
- 34: Motorwicklung der zweiten Antriebseinheit 30

- 40: zweites Rotations-Translationsgetriebe
- 41: zweite Gewindespindel des zweiten Rotations-Translationsgetriebe 40
- 41.1: Lager der zweiten Gewindespindel 41
- 41.2: Lager der zweiten Gewindespindel 41
- 42: zweite Gewindemutter des zweiten Rotations-Translationsgetriebe 40
- 42.1: Flansch der zweiten Gewindemutter 42
- 43.1: zweites Kraftübertragungselement, Hydraulikkolben
- 43.2: zweites Kraftübertragungselementen, Hydraulikkolben

- 50: Hydraulik- oder Pneumatikblock
- 51.1: zylinderförmige Kammer des Hydraulik- oder Pneumatik-blockes 50
- 51.2: zylinderförmige Kammer des Hydraulik- oder Pneumatik-blockes 50
- 52.1: zylinderförmige Kammer des Hydraulik- oder Pneumatik-blockes 50
- 52.2: zylinderförmige Kammer des Hydraulik- oder Pneumatik-blockes 50
- 53: Hohlraum des Hydraulik- oder Pneumatikblockes 50

## Patentansprüche

1. Linearaktuator (1) zur Erzeugung einer linearen Stellkraft, umfassend:
- eine erste motorische Antriebseinheit (10) mit einer als Hohlwelle ausgebildeten ersten Antriebswelle (11),
- ein von der ersten motorischen Antriebseinheit (10) angetriebenes erstes Rotations-Translationsgetriebe (20) mit einer ersten Gewindespindel (21) und einer ersten mit der Gewindespindel in Eingriff stehenden Gewindemutter (22),
- eine axial zur ersten motorischen Antriebseinheit (10) angeordnete zweite motorische Antriebseinheit (30) mit einer Antriebswelle (31), und
- ein von der zweiten motorischen Antriebseinheit (30) angetriebenes zweites Rotations-Translationsgetriebe (40) mit einer zweiten Gewindespindel (41) und einer mit der zweiten Gewindespindel (41) in Eingriff stehenden Gewindemutter (42), wobei die Antriebswelle (31) der zweiten motorischen Antriebseinheit (30) durch die als Hohlwelle ausgebildete Antriebswelle (11) hindurchgeführt ist und mit der zweiten Gewindespindel (41) drehfest verbunden ist, **dadurch gekennzeichnet, dass**
- die Antriebswelle (11) der ersten motorischen Antriebseinheit (10) als erste Gewindespindel (21) ausgebildet ist.

2. Linearaktuator (1) nach Anspruch 1, **dadurch gekennzeichnet, dass** zur Erzeugung der linearen Stellkraft die erste Gewindemutter (22) mit einem ersten Kraftübertragungselement (23.1, 23.2) und die zweite Gewindemutter (42) mit einem zweiten Kraftübertragungselement (43.1, 43.2) verbunden ist.

3. Linearaktuator (1) nach Anspruch 1 oder 2, **dadurch gekennzeichnet, dass** die ersten und zweiten Kraftübertragungselemente (23.1, 23.2, 43.1, 43.2) mit einem Hydraulik- oder Pneumatikblock (50) zur Erzeugung eines Hydraulik- oder Pneumatikdruckes zusammenwirken.

4. Linearaktuator (1) nach Anspruch 1 oder 2, **dadurch gekennzeichnet, dass** die ersten und zweiten Kraftübertragungselemente als Hydraulik- oder Pneumatikkolben (23.1, 23.2, 43.1, 43.2) ausgebildet sind, welche mit in dem Hydraulik- oder Pneumatikblock (50) angeordneten und an die Hydraulik- oder Pneumatikkolben (23.1, 23.2, 43.1, 43.2) angepasste zylinderförmigen Kammern (51.1, 51.2) zusammenwirken.

5. Linearaktuator (1) nach Anspruch 3 oder 4, **dadurch gekennzeichnet, dass** das erste und zweite Rotations-Translationsgetriebe (20, 40) auf gegenüberliegenden Seiten des Hydraulik- oder Pneumatikblockes (50) angeordnet sind.

6. Linearaktuator (1) nach einem der Ansprüche 3 bis 5, **dadurch gekennzeichnet, dass** die erste und zweite Antriebseinheit (10, 30) zusammen mit dem ersten Rotations-Translationsgetriebe (20) in einem ersten Gehäuse (2) angeordnet ist, welches an dem Hydraulik- oder Pneumatikblock (50) angeflanscht ist.

7. Linearaktuator (1) nach einem der Ansprüche 3 bis 6, **dadurch gekennzeichnet, dass** das zweite Rotations-Translationsgetriebe (40) in einem zweiten Gehäuse (3) angeordnet ist, welches an dem Hydraulik- oder Pneumatikblock (50) angeflanscht ist.

8. Linearaktuator (1) nach einem der vorhergehenden Ansprüche, **dadurch gekennzeichnet, dass** die erste und zweite Antriebseinheiten (10, 30) jeweils als Elektromotor ausgebildet sind.

9. Linearaktuator (1) nach Anspruch 8, **dadurch gekennzeichnet, dass** die erste Gewindemutter (22) zumindest teilweise von dem Läufer (12) der ersten Antriebseinheit (10) umschlossen wird.

10. Linearaktuator (1) nach einem der vorhergehenden Ansprüche, **dadurch gekennzeichnet, dass** das erste und zweite Rotations-Translationsgetriebe jeweils als Kugelgewindetrieb ausgebildet ist.

11. Linearaktuator nach einem der vorhergehenden Ansprüche, **dadurch gekennzeichnet, dass** der ersten und zweiten Antriebseinheit (10, 30) jeweils eine Steuereinheit (4, 5) zugeordnet ist, wobei die Steuereinheiten (4, 5) identisch ausgebildet sind.

## Claims

1. Linear actuator (1) for generating a linear actuating force, comprising:
- a first motorized drive unit (10) with a first drive shaft (11) which is configured as a hollow shaft,
- a first rotational/translational gear mechanism (20) which is driven by the first motorized drive unit (10), with a first threaded spindle (21) and a first threaded nut (22) which is in engagement with the threaded spindle,
- a second motorized drive unit (30) which is arranged axially with respect to the first motorized drive unit (10), with a drive shaft (31), and
- a second rotational/translational gear mechanism (40) which is driven by the second motorized drive unit (30), with a second threaded spindle (41) and a threaded nut (42) which is in engagement with the second threaded spindle (41), the drive shaft (31) of the second motorized drive unit (30) being guided through the drive shaft (11) which is configured as a hollow shaft, and being connected fixedly to the second threaded spindle (41) so as to rotate with it,
**characterized in that**
- the drive shaft (11) of the first motorized drive unit (10) is configured as a first threaded spindle (21).

2. Linear actuator (1) according to Claim 1, **characterized in that**, in order to generate the linear actuating force, the first threaded nut (22) is connected to a first force transmission element (23.1, 23.2) and the second threaded nut (42) is connected to a second force transmission element (43.1, 43.2).

3. Linear actuator (1) according to Claim 1 or 2, **characterized in that** the first and second force transmission elements (23.1, 23.2, 43.1, 43.2) interact with a hydraulic or pneumatic block (50) in order to generate a hydraulic or pneumatic pressure.

4. Linear actuator (1) according to Claim 1 or 2, **characterized in that** the first and second force transmission elements are configured as hydraulic or pneumatic pistons (23.1, 23.2, 43.1, 43.2) which interact with cylindrical chambers (51.1, 51.2) which are arranged in the hydraulic or pneumatic block (50) and are adapted to the hydraulic or pneumatic pistons (23.1, 23.2, 43.1, 43.2).

5. Linear actuator (1) according to Claim 3 or 4, **characterized in that** the first and second rotational/translational gear mechanism (20, 40) are arranged on opposite sides of the hydraulic or pneumatic block (50).

6. Linear actuator (1) according to one of Claims 3 to 5, **characterized in that** the first and second drive unit (10, 30) are arranged together with the first rotational/translational gear mechanism (20) in a first housing (2) which is flange-connected to the hydraulic or pneumatic block (50).

7. Linear actuator (1) according to one of Claims 3 to 6, **characterized in that** the second rotational/translational gear mechanism (40) is arranged in a second housing (3) which is flange-connected to the hydraulic or pneumatic block (50).

8. Linear actuator (1) according to one of the preceding claims, **characterized in that** the first and second drive units (10, 30) are configured in each case as an electric motor.

9. Linear actuator (1) according to Claim 8, **characterized in that** the first threaded nut (22) is enclosed at least partially by the rotor (12) of the first drive unit (10).

10. Linear actuator (1) according to one of the preceding claims, **characterized in that** the first and second rotational/translational gear mechanism are configured in each case as a ball screw drive.

11. Linear actuator according to one of the preceding claims, **characterized in that** the first and second drive unit (10, 30) are assigned in each case one control unit (4, 5), the control units (4, 5) being of identical configuration.

## Revendications

1. Actionneur linéaire (1) destiné à générer une force de commande linéaire, comprenant :
- une première unité d'entraînement motorisée (10) pourvue d'un premier arbre d'entraînement (11) réalisé sous la forme d'un arbre creux,
- un premier engrenage de rotation-translation (20) entraîné par la première unité d'entraînement motorisée (10), pourvu d'une première tige filetée (21) et d'un premier écrou fileté (22) qui est en prise avec la tige filetée,
- une deuxième unité d'entraînement motorisée (30) disposée axialement par rapport à la première unité d'entraînement motorisée (10), pourvue d'un arbre d'entraînement (31), et
- un deuxième engrenage de rotation-translation (40) entraîné par la deuxième unité d'entraînement motorisée (30), pourvu d'une deuxième tige filetée (41) et d'un écrou fileté (42) qui est en prise avec la deuxième tige filetée (41), l'arbre d'entraînement (31) de la deuxième unité d'entraînement motorisée (30) passant à travers l'arbre d'entraînement (11) réalisé sous la forme d'un arbre creux et étant relié solidaire en rotation à la deuxième tige filetée (41),
**caractérisé en ce que**
- l'arbre d'entraînement (11) de la première unité d'entraînement motorisée (10) est réalisé sous la forme de la première tige filetée (21).

2. Actionneur linéaire (1) selon la revendication 1, **caractérisé en ce qu'**en vue de générer la force de commande linéaire, le premier écrou fileté (22) est relié à un premier élément de transmission de force (23.1, 23.2) et le deuxième écrou fileté (42) est relié à un deuxième élément de transmission de force (43.1, 43.2).

3. Actionneur linéaire (1) selon la revendication 1 ou 2, **caractérisé en ce que** les premier et deuxième éléments de transmission de force (23.1, 23.2, 43.1, 43.2) coopèrent avec un bloc hydraulique ou pneumatique (50) pour générer une pression hydraulique ou pneumatique.

4. Actionneur linéaire (1) selon la revendication 1 ou 2, **caractérisé en ce que** les premier et deuxième éléments de transmission de force sont réalisés sous la forme de pistons hydrauliques ou pneumatiques (23.1, 23.2, 43.1, 43.2), lesquels coopèrent avec des chambres de forme cylindrique (51.1, 51.2) disposées dans le bloc hydraulique ou pneumatique (50) et adaptées aux pistons hydrauliques ou pneumatiques (23.1, 23.2, 43.1, 43.2).

5. Actionneur linéaire (1) selon la revendication 3 ou 4, **caractérisé en ce que** les premier et deuxième engrenages de rotation-translation (20, 40) sont disposés sur des côtés opposés du bloc hydraulique ou pneumatique (50).

6. Actionneur linéaire (1) selon l'une des revendications 3 à 5, **caractérisé en ce que** les première et deuxième unités d'entraînement motorisées (10, 30) sont disposées conjointement avec le premier engrenage de rotation-translation (20) dans un premier boîtier (2), lequel est bridé au bloc hydraulique ou pneumatique (50).

7. Actionneur linéaire (1) selon l'une des revendications 3 à 6, **caractérisé en ce que** le deuxième engrenage de rotation-translation (40) est disposé dans un deuxième boîtier (3), lequel est bridé au bloc hydraulique ou pneumatique (50).

8. Actionneur linéaire (1) selon l'une des revendications précédentes, **caractérisé en ce que** les première et deuxième unités d'entraînement motorisées (10, 30) sont respectivement réalisées sous la forme d'un moteur électrique.

9. Actionneur linéaire (1) selon la revendication 8, **caractérisé en ce que** le premier écrou fileté (22) est au moins partiellement entouré par le rotor (12) de la première unité d'entraînement (10).

10. Actionneur linéaire (1) selon l'une des revendications précédentes, **caractérisé en ce que** les premier et deuxième engrenages de rotation-translation sont respectivement réalisés sous la forme de vis à billes.

11. Actionneur linéaire selon l'une des revendications précédentes, **caractérisé en ce qu'**une unité de commande (4, 5) est respectivement associée aux première et deuxième unités d'entraînement motorisées (10, 30), les unités de commande (4, 5) étant de configuration identique.
